# EUROPÄISCHE PATENTSCHRIFT

(11) **EP 4 330 119 B1**
(45) Veröffentlichungstag und Bekanntmachung des Hinweises auf die Patenterteilung: **30.07.2025**
(21) Anmeldenummer: 22709678.1
(22) Anmeldetag: 28.02.2022
(51) Int. Cl.: B62J 43/13, B62J 43/20

(54) **ELEKTROFAHRRAD UND BATTERIEHALTERUNG**
ELECTRIC BIKE AND BATTERY HOLDER
VÉLO ÉLECTRIQUE ET SUPPORT DE BATTERIE

(30) Priorität: 27.04.2021 DE 102021110692
(43) Veröffentlichungstag der Anmeldung: 06.03.2024
(73) Patentinhaber: Porsche eBike Performance GmbH, 85521 Ottobrunn (DE)
(72) Erfinder: BIECHELE, Johannes, 85521 Ottobrunn (DE); KAUFMANN, Oskar, 85521 Ottobrunn (DE)
(74) Vertreter: Völkl Siebenson Patentanwälte - Partnerschaft mbB
(86) Internationale Anmeldenummer: PCT/EP2022/054957
(87) Internationale Veröffentlichungsnummer: WO 2022/228749

(56) Entgegenhaltungen:
- CN-U- 204 096 021
- DE-A1- 102015 010 818
- DE-U1- 202014 009 732
- US-A1- 2019 291 810
- US-B2- 11 052 968

## Beschreibung

Die Erfindung betrifft ein Elektrofahrrad sowie eine Batteriehalterung.

Fahrräder erfreuen sich seit langem als leicht zu handhabende und emissionsfreie Fortbewegungsmittel großer Beliebtheit. Über viele Jahre haben sie auch als Sport- bzw. Fitnessgeräte massenhafte Verbreitung gefunden, und es haben sich für unterschiedliche sportliche Einsatzfelder besonders geeignete Typen herausgebildet.

Seit einigen Jahren wächst auch die Begeisterung für Elektrofahrräder (insb. sogenannte "Pedelecs"). Potenzielle Fahrer sind nicht nur ältere, weniger konditionsstarke oder von sportlichen Ambitionen freie Personen, sondern auch sportliche, jüngere Fahrer, sei es zur Nutzung auf dem Arbeitsweg oder wegen der Möglichkeit, mit ihnen ohne Überbeanspruchung der eigenen Physis den Aktionsradius zu erweitern und/oder die Reisegeschwindigkeit zu erhöhen. Gerade bei Mountainbikern und Rennradfahrern scheint das Interesse an elektrisch unterstützten Fahrrädern zu wachsen.

Um eine Batterie für den Elektromotor am Fahrrad zu montieren bieten sich verschiedene Möglichkeiten, wobei für die Batterie eine robuste Fixierung einerseits und ein einfaches Handling andererseits gewährleistet sein wollen. Extreme Kräfte, etwa Beschleunigungskräfte während der Fahrt, Vibrationen und Stöße wie auch Umwelteinflüsse, etwa Schmutz, wollen berücksichtigt werden.

Die DE102015010818A1 betrifft eine Vorrichtung zur Energiespeicherung und/oder Energieabgabe, die mehrfach aufladbar ist, für ein leichtes Elektrofahrzeug (LEV), insbesondere Elektrofahrräder. Die Vorrichtung umfasst ein Mittel zur Energieaufnahme und/oder Energieabgabe, insbesondere einen Akkumulator, ein Mittel zur elektrischen Kopplung an einen Elektromotor des leichten Elektrofahrzeugs in einem Rahmenelement des Fahrzeugrahmens, sowie ein Mittel zum Halten und Kontaktieren. Dieses Mittel ist auf einer Oberfläche des Rahmenelements angeordnet, insbesondere am vorderen Unterrohr und/oder Sitzrohr und/oder Oberrohr, und ist mit dem Mittel zur elektrischen Kopplung verbunden. Das Mittel zur Energieaufnahme und/oder Energieabgabe wird auf dem Mittel zum Halten und Kontaktieren platziert, wobei es durch eine seitliche Schwenkbewegung am Mittel zum Halten und Kontaktieren fixiert werden kann und somit mit einem Mittel zur elektrischen Kontaktierung verbunden werden kann.

Die DE202014009732U1 offenbart ein Halteelement (100) zur Aufnahme eines Akkumulators (200), insbesondere eines Fahrradakkus. Es besteht aus einem flachen, länglichen ersten Sub-Element (130), das den Boden bildet, sowie einem zweiten (140) und dritten Sub-Element (150), die seitlich an den kurzen Seiten des ersten Sub-Elements angebracht sind und die seitliche Begrenzung bilden. Das zweite Sub-Element besitzt einen Überhang (160), der als Klemmvorrichtung für ein Ende des Akkumulators dient, während das dritte Sub-Element mindestens eine hakenförmige Vertiefung (230) zur Aufnahme eines hakenförmigen Gegenstücks des Akkumulators aufweist. Diese Konstruktion ermöglicht eine sichere Befestigung des Akkumulators im Halteelement, um ein ungewolltes Entfernen oder Verrutschen zu verhindern.

Die CN204096021U offenbart eine Befestigungsstruktur für eine Batterie, die auf der Schräge eines batteriebetriebenen Fahrzeugs montiert wird. Diese Struktur umfasst einen oberen und einen unteren festen Sitz, wobei der untere Sitz drehbar mit der Batterie verbunden ist. Ein Verriegelungsmechanismus fixiert die Batterie am oberen Sitz. Die Batterie kann durch Drehen in die richtige Position gebracht und dann durch einen Riegelmechanismus gesichert werden.

Es ist wünschenswert, ein Konzept für eine Batteriehalterung anzugeben, welches einen kompakten Aufbau erlaubt und dazu beiträgt die obigen Punkte zu berücksichtigen.

Gemäß einem Aspekt wird ein Elektrofahrrad offenbart. Das Elektrofahrrad weist einen Fahrradrahmen mit einem Rahmenabschnitt auf. Weiterhin ist eine Batterie vorgesehen. Das Elektrofahrrad weist weiterhin eine Batteriehalterung auf, die am Rahmenabschnitt angeordnet ist und zwei Haltelaschen aufweist, mittels derer die Batterie für einen Elektromotor des Elektrofahrrads, insbesondere zumindest formschlüssig, am Rahmenabschnitt gehalten wird. Die Batteriehalterung, etwa die beiden Haltelaschen, ist so ausgebildet, dass - in einem ersten Montageschritt - die Batterie an die erste Haltelasche ansetzbar und anschließend - in einem zweiten Montageschritt - gegen den Rahmenabschnitt derart verschwenkbar ist, dass die Batterie in Eingriff mit der zweiten Haltelasche gelangt und dadurch an dem Fahrradrahmen, insbesondere formschlüssig, gehalten ist. Die zweite Haltelasche ist zum Verrasten mit der Batterie federnd ausgebildet. Die Batterie weist eine Aussparung oder Öffnung auf, in die die zweite Haltelasche zum formschlüssigen Zusammenwirken mit der Batterie im zweiten Montageschritt eintaucht. Die Batterie weist an einer dem Rahmenabschnitt abgewandten Außenseite eine Öffnung auf, so dass die zweite Haltelasche von außen betätigt und entriegelt und dadurch die Batterie abgenommen werden kann.

Die Batteriehalterung gemäß der Erfindung ermöglicht einen leichten und günstigen Aufbau. Insbesondere hat die Halterung lediglich zwei Haltelaschen, die an dem Rahmenabschnitt angeordnet oder festgelegt sind. Die Batteriehalterung ermöglicht dadurch einen mechanisch einfachen Aufbau, wobei wenig Materialeinsatz und ein geringer Komplexitätsgrad vonnöten sind. Die Batteriehalterung ist somit mehrteilig ausgebildet, kann aber auch einstückig ausgebildet sind, etwa indem die beiden Laschen einstückig und fest verbunden sind. Durch das Vorsehen von lediglich zwei Haltelaschen wird dazu beigetragen, Gewicht und Bauraum erheblich zu reduzieren. Weiterhin ist ein ergonomisch besonders einfaches Bedienkonzept ermöglicht, wobei beispielsweise die Batterie lediglich an der Haltelasche angesetzt und anschließend gegen den Rahmenabschnitt verschwenkt werden muss. Dies kann einhändig durch einen Benutzer geschehen. Die Batteriehalterung kann beispielsweise einfach an die Unterseite des Rahmenabschnitts montiert werden. Die Batteriehalterung ermöglicht auch eine robuste Ausgestaltung, etwa durch entsprechende Auslegung der Haltelaschen. Weiterhin ist ermöglicht, dass die Batteriehalterung unanfällig gegen Umwelteinflüsse ist, beispielsweise wenn diese an die Unterseite des Rahmenabschnitts montiert ist.

Die Batterie ist lösbar, insbesondere abnehmbar, in der Batteriehalterung aufnehmbar. Mit anderen Worten kann die Batterie werkzeuglos und ohne großen Aufwand montiert oder demontiert werden. Die Batterie kann somit einfach ein- und ausgebaut und somit getauscht werden. Die Batterie wird beispielsweise mittels der beiden Haltelaschen sicher gehalten, etwa form- und /oder kraftschlüssig.

Die Haltelaschen ermöglichen insbesondere einen formschlüssigen Eingriff mit der Batterie, beispielsweise umgreifen eine oder beide Haltelaschen die Batterie von außen oder greifen in eine entsprechende Ausnehmung der Batterie ein. Die Haltelaschen sind beispielsweise als Blechlaschen ausgebildet. Die Haltelaschen sind beispielsweise separat am Rahmenabschnitt montierbar und bilden die Batteriehalterung. Die Haltelaschen sind in bestimmtem Abstand zueinander angeordnet, so dass eine Anpassung an verschiedene Batteriemodelle ermöglicht ist. Die Haltelaschen tragen somit im besonderen Maße zu der flexiblen Montage der Batterie bei. Die beiden Haltelaschen tragen nur unwesentlich zum Gesamtgewicht des Fahrrads bei.

Bei dem Rahmenabschnitt handelt es sich beispielsweise um einen Rahmenabschnitt des Fahrradrahmens, der zum Tretlager hinführt. Beispielsweise handelt es sich um das Sitzrohr oder das Unterrohr. Die erste Haltelasche ist beispielsweise dem Tretlager zugewandt, während die zweite Haltelasche dem Tretlager abgewandt angeordnet ist.

Erfindungsgemäß ist die zweite Haltelasche federnd ausgebildet zum Verrasten mit der Batterie. Dadurch ist ein einfaches Verrasten und Entrasten der Batterie ermöglicht. Die Batterie kann folglich händisch montiert beziehungsweise entnommen werden, wobei die als Federlasche ausgebildete zweite Lasche jeweils entsprechend abgebogen wird. Bei der Montage der Batterie wird die Federlasche entgegen einer Federkraft durch Zusammenwirken mit der Batterie, d.h. beim Verschwenken dieser an den Rahmenabschnitt, aus ihrer Ruhestellung herausbewegt, ehe die Batterie den finalen Montagezustand erreicht, in welchem die Federlasche aufgrund der wirkenden Federkraft in eine Eingriffsstellung oder die Ruhestellung zurückgebogen ist, in welcher die zweite Haltelasche mit der Batterie formschlüssig in Eingriff ist, d.h. verrastet ist. Umgekehrt kann die zweite Haltelasche durch Bewegen aus der Eingriffsstellung/Ruhestellung von der Batterie gelöst werden, so dass diese außer Eingriff mit der Batterie gelangt und diese abgenommen werden kann. Beispielsweise weist die zweite Lasche einen Rasthaken auf, der entsprechend mit der Batterie oder einer Batteriekomponente (etwa Gehäuse) zusammenwirkt.

Erfindungsgemäß weist die Batterie eine Aussparung oder Öffnung auf, in die die zweite Haltelasche im zweiten Montageschritt eintaucht zum formschlüssigen Zusammenwirken mit der Batterie. Das Elektrofahrrad weist beispielsweise die Batterie auf, die in einem finalen Montagezustand, in welchem die Batterie in der Batteriehalterung gehalten ist, derart fixiert ist, dass die zweite Haltelasche in die Batterie, das heißt in das Batteriegehäuse, eintaucht und im Inneren der Batterie mit dieser in Eingriff gelangt, insb. formschlüssig zusammenwirkt. Beispielsweise weist die Haltelasche ein Verriegelungselement oder einen Rasthaken auf, der im finalen Montagezustand mit einem entsprechenden Gegenrastelement beziehungsweise Gegenrasthaken der Batterie mechanisch zusammenwirkt. Dies hat den Vorteil, dass die zweite Haltelasche die Batterie nicht von außen umgreift, sondern im Inneren mit dieser mechanisch zum Halten zusammenwirkt und somit vor äußeren Einflüssen geschützt ist. Beispielsweise findet das formschlüssige Zusammenwirken der zweiten Haltelasche mit der Batterie in einem dem Tretlager abgewandten Endbereich der Batteriehalterung beziehungsweise der Batterie statt. Mit anderen Worten ist die Aussparung beziehungsweise die Öffnung in dem dem Tretlager abgewandten Endbereich der Batteriehalterung beziehungsweise der Batterie vorgesehen. Dies hat den Vorteil, dass das Hauptgewicht beim Montieren der Batterie von der ersten Haltelasche getragen wird, so dass die Batterie leicht gegen den Rahmenabschnitt verschwenkt werden kann. Die Öffnung in der Batterie für die zweite Haltelasche kann auch entlang der Batterie an anderer Stelle, etwa mittig, positioniert sein.

Erfindungsgemäß weist die Batterie an einer dem Rahmenabschnitt abgewandten Außenseite eine Öffnung auf, sodass die zweite Haltelasche entriegelt und die Batterie abgenommen werden kann. Die Öffnung ist beispielsweise auf einer Unterseite der Batterie angeordnet. Die Öffnung ist von außen frei zugänglich. Somit kann die zweite Haltelasche durch Eingriff in die entsprechend vorgesehene Öffnung von außen betätigt werden. Dies ermöglicht ein besonders einfaches Entriegeln und damit Abnehmen der Batterie vom Rahmenabschnitt. Dadurch, dass die Haltelasche nicht an einem äußeren Ende - bezüglich der Richtung entlang des Rahmenabschnitts - die Batterie umgreift, kann mit einer Hand das Ende der Batterie gegriffen und mit den Fingern durch Eintauchen in die Öffnung die Haltelasche gelöst werden. Beim Entriegeln liegt die Batterie somit bereits in der Hand des Bedieners, sodass diese nicht zwingend mit einer zweiten Hand gegriffen und/oder ungewollt herabfallen kann.

Gemäß einer Ausführungsform ist die erste Haltelasche derart ausgebildet, dass im ersten Montageschritt die Batterie aufgelegt oder eingehängt werden kann. Anschließend kann die Batterie entsprechend um den Auflagebereich beziehungsweise um den Einhängebereich herum verschwenkt werden. Mit anderen Worten wir die Batterie auf die Haltelasche zumindest teilweise aufgelegt oder in diese eingehängt. Die Batterie wird so auflegt, dass eine definierte Verschwenkungsachse ausbildbar ist. Die Batterie schlägt beispielsweise gegen die Haltelasche an und liegt auf, so dass eine definierte Verschwenkungsachse gegeben ist. Das Auflegen beziehungsweise das Einhängen der Batterie an der ersten Haltelasche definiert eine Verschwenkungsachse für den zweiten Montageschritt. Die erste Haltelasche stellt beispielsweise ein Loslager dar.

Die erste Haltelasche weist beispielsweise ein Auflageelement oder ein Einhängeelement auf. Beispielsweise sind das Auflageelement oder das Einhängeelement an einem dem Rahmenabschnitt abgewandten, freien Ende der ersten Haltelasche angeordnet. Das Auflageelement oder das Einhängeelement erstreckt sich in Richtung der zweiten Haltelasche, beispielsweise entlang des Rahmenabschnitts vom Tretlager weg. Beispielsweise ist auch ein Hakenelement vorgesehen, welches mit der Batterie an der entsprechenden Seite mechanisch, das heißt formschlüssig, zusammenwirkt, beispielsweise untergreift, umgreift oder dergleichen. Die Ausführungsform ermöglicht ein besonders einfaches Montieren der Batterie an der Batteriehalterung.

Gemäß einer Ausführungsform ist die Batteriehalterung einstückig ausgebildet und die beiden Haltelaschen sind über einen Steg verbunden. Die Batteriehalterung ist somit in etwa C-Form-artig ausgebildet. Dadurch ist ein solides Gesamtkonstrukt ermöglicht. Die beiden Haltelaschen sind in einem definierten Abstand zueinander ausgerichtet. Dies ermöglicht eine besonders einfache Montage, da die Batteriehalterung als Einheit montiert werden kann. Ein weiteres Einstellen der Haltelaschen zueinander hinsichtlich des Abstandes ist somit nicht mehr nötig. Alternativ ist die Batteriehalterung aus mehreren Bauteilen zu einer Baugruppe aufgebaut.

Gemäß einer Ausführungsform weist der Steg zwei Montageabschnitte auf, mittels derer die Batteriehalterung an dem Rahmenabschnitt festgelegt ist, wobei der Steg zwischen den Montageabschnitten einen Mittelstegabschnitt aufweist, der derart ausgebildet ist, dass dieser von dem Rahmenabschnitt beabstandet verläuft, sodass zwischen dem Rahmenabschnitt und dem Mittelstegabschnitt ein Zwischenraum gebildet ist.

Die beiden Montageabschnitte erstrecken sich entlang einer ersten Ebene und weisen Auflageflächen auf, mittels denen die Batteriehalterung am Rahmenabschnitt aufliegt. In den Montageabschnitten wird die Batteriehalterung am Rahmenabschnitt festgelegt. Der Mittelstegabschnitt erstreckt sich in einer zweiten Ebene, wobei die zweite Ebene im Wesentlichen parallel und beabstandet von der ersten Ebene verläuft. Mit anderen Worten weist die Batteriehalterung einen ersten Montageabschnitt auf, dem mittels einer Stufe oder eines Absatzes der Mittelstegabschnitt folgt, ehe der Mittelstegabschnitt wieder über eine gegenteilige Richtung verlaufende Stufe oder Absatz in den zweiten Montageabschnitt übergeht. Der erste und zweite Montageabschnitt stellen beispielsweise Endbereiche der Batteriehalterung dar. Die erste Haltelasche ist am ersten Montageabschnitt ausgebildet beziehungsweise erstreckt sich von diesem normal zu der ersten Ebene nach außen. Analog dazu ist die zweite Haltelasche im zweiten Montageabschnitt angeordnet beziehungsweise erstreckt sich von diesem normal zu der ersten beziehungsweise zweiten Ebene nach außen.

Der Zwischenraum ermöglicht, dass in diesen problemlos Kabelleitungen oder dergleichen verstaut oder geführt werden können, ohne mit der Batterie an sich zu kollidieren. Zusätzlich oder alternativ können in dem Zwischenraum auch ein oder mehrere Werkzeuge verstaut werden. Bei den Werkzeugen kann es sich beispielsweise um ein Schnellreparaturset für das Elektrofahrrad handeln. Der Zwischenraum ist bei montierter Batterie durch die Batterie selbst verdeckt oder geschützt. Mit anderen Worten ist die Batterie so ausgebildet, dass diese im finalen Montagezustand den Zwischenraum weitestgehend bis vollständig umschließt und zusammen mit dem Rahmenabschnitt abschließt. Dadurch ist ein Zugriff von außen nur erschwert oder gar nicht möglich.

Gemäß einer Ausführungsform ist die Batteriehalterung aus Metall, Kunststoff oder einem Verbundwerkstoff, insbesondere einem Faserverbundwerkstoff, hergestellt. Die Batteriehalterung ist insbesondere als ein Metallblech hergestellt. Beispielsweise weist die Batteriehalterung eine Wandstärke von lediglich wenigen Millimetern auf, beispielsweise weniger als 5 mm, bevorzugt 3 mm oder weniger. Dies trägt dazu bei, dass es sich bei der Batteriehalterung um ein besonders leichtes, aber dennoch stabiles Gesamtkonstrukt handelt. Insbesondere durch die blechartige Struktur können Vibrationen und Stöße gut kompensiert beziehungsweise gedämpft werden.

Gemäß einer Ausführungsform ist an dem Rahmenabschnitt oder der Batteriehalterung ein Schloss angeordnet, sodass die Batterie im montierten Zustand am Rahmenabschnitt verriegelbar ist. Mittels des Schlosses ist ein Diebstahlschutz ermöglicht. Das Schloss schließt die Batterie an den Rahmenabschnitt, sodass ein Entnehmen, beispielsweise durch Entriegeln der zweiten Lasche, verhindert ist.

Gemäß einer Ausführungsform weist die Batteriehalterung ein elektrisches Kontaktelement auf, welches ausgebildet ist, im montierten Zustand der Batterie eine elektrische Kontaktierung zwischen Batterie und Batteriehalterung sicherzustellen. Insbesondere eignet sich eine schwimmende Lagerung des Kontaktelements, um ein reibungsfreies Kontaktieren zu gewährleisten. Dadurch werden Toleranzen, "eine unsauber geführte Batterie" oder dergleichen ausgeglichen. Durch das Kontaktelement kann sichergestellt sein, dass die Batterie ordnungsgemäß montiert ist, beispielsweise.

Gemäß einem weiteren Aspekt wird eine Batteriehalterung für ein Elektrofahrrad gemäß dem ersten Aspekt offenbart. Die Batteriehalterung ermöglicht im Wesentlichen die zuvor genannten Vorteile und Funktionen. Die oben beschriebene Weiterbildung, insbesondere betreffend die Batteriehalterung, gelten analog.

Weitere Ausführungsformen, Vorteile und Funktionen werden in der nachfolgenden Beschreibung von Ausführungsbeispielen unter Zuhilfenahme der angehängten Figuren erläutert. Gleiche, gleichartige oder gleichwirkende Elemente können in den Figuren mit den gleichen Bezugszeichen versehen sein.

In den Figuren zeigen:
Figur 1 eine schematische Ansicht eines Elektrofahrrads,
Figur 2 eine schematische Ansicht eines Elektrofahrrads gemäß einem Ausführungsbeispiel der Erfindung in einem ersten Montagezustand einer Batterie in einer Batteriehalterung,
Figur 3 eine schematische Ansicht des Elektrofahrrads gemäß dem Ausführungsbeispiel der Erfindung in einem finalen Montagezustand der Batterie,
Figur 4 eine perspektivische Ansicht der Batteriehalterung und
Figuren 5 bis 9 verschiedene Ansichten der Batteriehalterung mit Batterie.

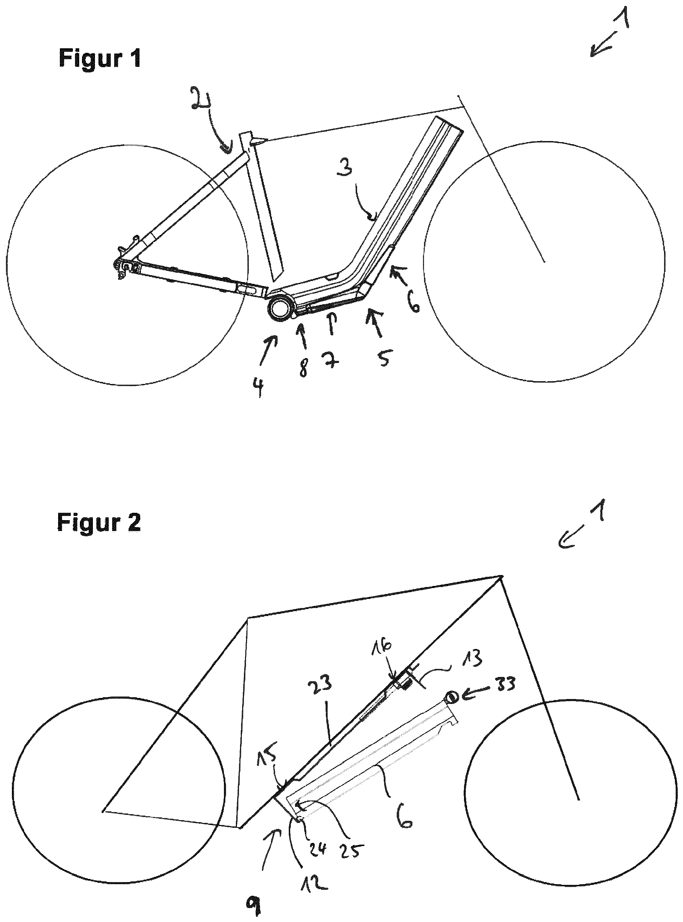

Figur 1 zeigt exemplarisch ein schematisches Fahrrad 1, bei welchem es sich um ein Elektrofahrrad handelt. Das Fahrrad 1 hat einen Fahrradrahmen 2, welcher unter anderem durch einen Rahmenabschnitt 3 gebildet ist. Bei dem Rahmenabschnitt 3 handelt es sich im Ausführungsbeispiel um ein Unterrohr. Der Rahmenabschnitt 3 bzw. das Unterrohr erstreckt sich vom Steuerrohr (entspricht dem Rahmenabschnitt, an dem das Lenkrad gelagert ist, in Fig. 1 nur angedeutet und ohne Bezugszeichen) in Richtung eines Tretlagers 4 und hat einen geschwungen Verlauf.

An und/oder in dem Unterrohr 3 ist eine Antriebsvorrichtung 5 angeordnet. Die Antriebsvorrichtung 5 ist an einer Unterseite des Unterrohrs 3 montiert, beispielsweise in einem offenen Rohrabschnitt. Unter anderem umfasst die Antriebsvorrichtung eine Energiespeichervorrichtung 6 in Form einer Batterie bzw. eines Akkus, einen Elektromotor 7 und ein Getriebe 8, die miteinander elektrisch und/oder mechanisch gekoppelt sind.

Die Antriebsvorrichtung 5 ist derart am Unterrohr 3 und dem Tretlager 4 angeordnet und ausgebildet, dass diese eine Kraft des Elektromotors 7, der mit Energie der Energiespeichervorrichtung 6 gespeist wird, über das Getriebe 8 auf eine Abtriebswelle zum Antrieb des Fahrrads 1 übertragen kann (nicht dargestellt). Die Abtriebswelle ist beispielsweise drehfest mit einem Kettenblatt zum Antrieb des Fahrrads verbunden. Die Abtriebswelle ist beispielsweise eine Hohlwelle, die um die Tretkurbel herum, d.h. koaxial zur Tretkurbelachse, angeordnet ist. Das Fahrrad 1 hat auch eine Tretkurbel zum manuellen Antrieb des Fahrrads 1.

An dieser Stelle sei darauf hingewiesen, dass weitere Details des Fahrrads 1. Das dargestellte Fahrrad 1 kann andere Ausgestaltungen haben. Auch die Anordnung und Ausgestaltung der Antriebsvorrichtung 5 ist in anderen Ausführungen andersartig (s. auch die weiteren Figuren), solange diese dem Antrieb des Fahrrads 1 dient. Weiterhin kann die Batterie 6 an andere Stelle platziert sein.

Nachfolgend wird im Detail auf eine Batteriehalterung, die Batterie und deren Montage beziehungsweise Demontage gemäß einem Ausführungsbeispiel der Erfindung eingegangen.

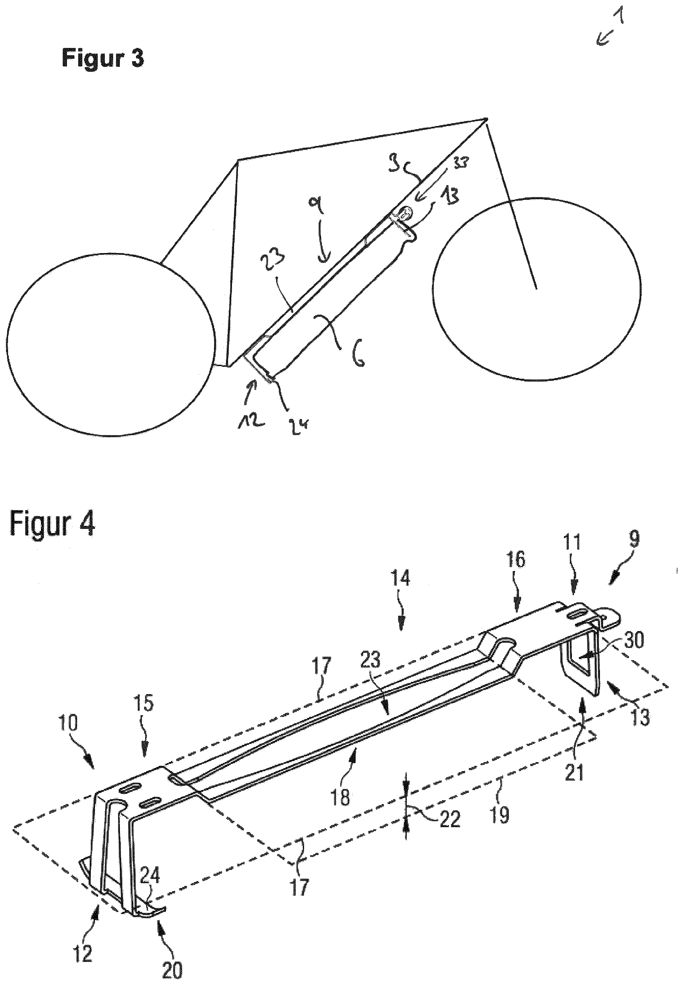

Figuren 2 und 3 zeigen ein Elektrofahrrad 1 gemäß einem Ausführungsbeispiel der Erfindung, wobei zwei Montagezustände einer Batterie 6 am Elektrofahrrad 1 gezeigt sind. Das Elektrofahrrad 1 weist eine Batteriehalterung 9 auf, die perspektivisch in Figur 4 isoliert dargestellt ist.

Die Batteriehalterung 9 ist aus einem Metallblech hergestellt und im Wesentlichen C-förmig ausgestaltet. Die Batteriehalterung 9 weist ein erstes Ende 10 sowie ein zweites Ende 11 auf. Am ersten Ende 10 weist die Batteriehalterung 9 eine erste Haltelasche 12 auf, während die Batteriehalterung 9 am zweiten Ende 11 eine zweite Haltelasche 13 aufweist. Die zweite Haltelasche 13 ist als federnde Lasche ausgebildet. Die beiden Haltelaschen 12 und 13 sind über einen Steg 14 miteinander verbunden. Der Steg 14 hat an den Enden 10 und 11, die auch als Endbereiche bezeichnet werden können, einen ersten Montageabschnitt 15 beziehungsweise einen zweiten Montageabschnitt 16, an dem die beiden Laschen 12 und 13 angeordnet sind, im Beispiel jeweils im Wesentlichen senkrecht abgebogen sind. Allgemein ausgedrückt erstrecken sich die Haltelaschen 12 und 13 normal zu einer ersten Haupterstreckungsebene 17, in beziehungsweise entlang derer sich die beiden Montageabschnitte 15 und 16 erstrecken.

Die beiden Montageabschnitte 15 und 16 sind über einen Mittelstegabschnitt 18 miteinander verbunden, der sich in beziehungsweise entlang einer zweiten Haupterstreckungsebene 19 erstreckt, die im Wesentlichen parallel zur ersten Haupterstreckungsebene 17 verläuft und von der ersten Haupterstreckungsebene 17 beabstandet in Richtung äußerer, freier Enden 20 beziehungsweise 21 der beiden Haltelaschen 12 und 13 versetzt ist. Die beiden Haupterstreckungsebenen 17 und 19 sind in Normalenrichtung um einen vorbestimmten Abstand 22 voneinander beabstandet. Durch diese Maßnahme ist zwischen den beiden Haupterstreckungsebene 17 und 19 im Bereich des Mittelstegabschnitts 18 eine Art Zwischenraum oder Freiraum 23 gebildet, auf den noch näher eingegangen wird. Im Bereich der Montageabschnitte 15 und 16 ist die Batteriehalterung 9 an dem Unterrohr 3, das heißt dem Rahmenabschnitt, beispielsweise in eine Aussparung montiert. Die Haltelaschen 12 und 13 stehen nach unten von dem Unterrohr 3 weg. Die erste Haltelasche 12 weist an ihrem freien Ende 20 ein Auflageelement 24 auf.

In dem in Figur 2 gezeigten Montagezustand wird die Batterie 6 in einem Montageschritt mit ihrem unteren Ende 25 derart formschlüssig an die erste Haltelasche 12 angesetzt, dass die Batterie 6 auf dem Auflageelement 24 aufliegt im Bereich ihres unteren Endes 25. Die Batterie 6 ist dabei bezüglich des Rahmenabschnitts 3 in einem vorbestimmten Winkel schräg angesetzt. Das Auflageelement 24 definiert einen unteren Anschlag und dadurch eine Schwenkachse für die Batterie 6.

Anschließend wird die Batterie 6 in einem zweiten Montageschritt gegen den Rahmenabschnitt 3 von unten um die Schwenkachse verschwenkt, sodass die zweite Haltelasche 13 formschlüssig mit der Batterie 6 derart zusammenwirken kann, dass die Batterie 6 am Unterrohr 3 sicher mechanisch gehalten ist. Dieser Zustand ist in Figur 3 schematisch gezeigt.

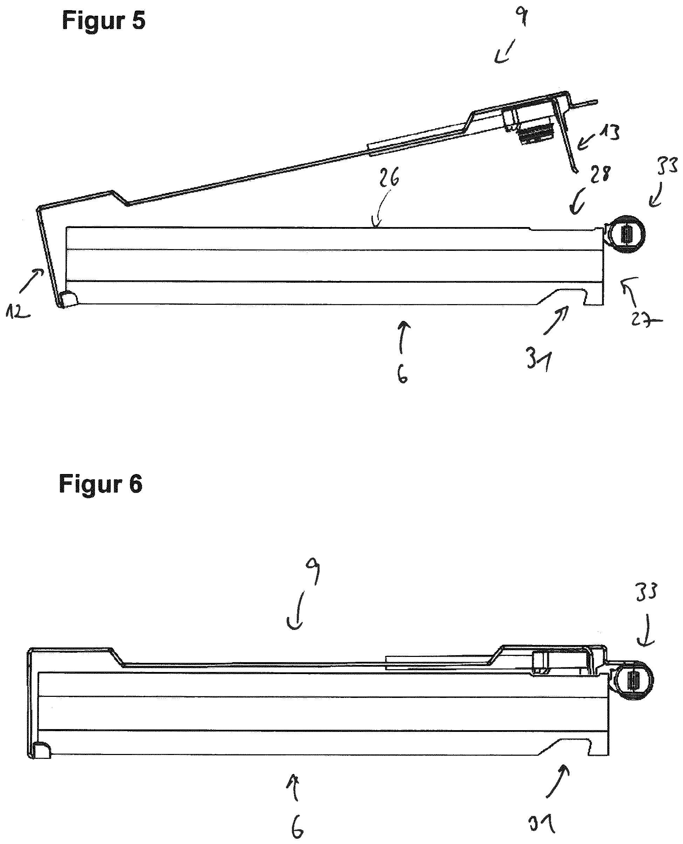

Figuren 5 und 6 zeigen die beiden Montagezustände in vergrößerten Ansichten, wobei die Batterie 6 und die Batteriehalterung 9 isoliert vom Fahrrad 1 dargestellt sind.

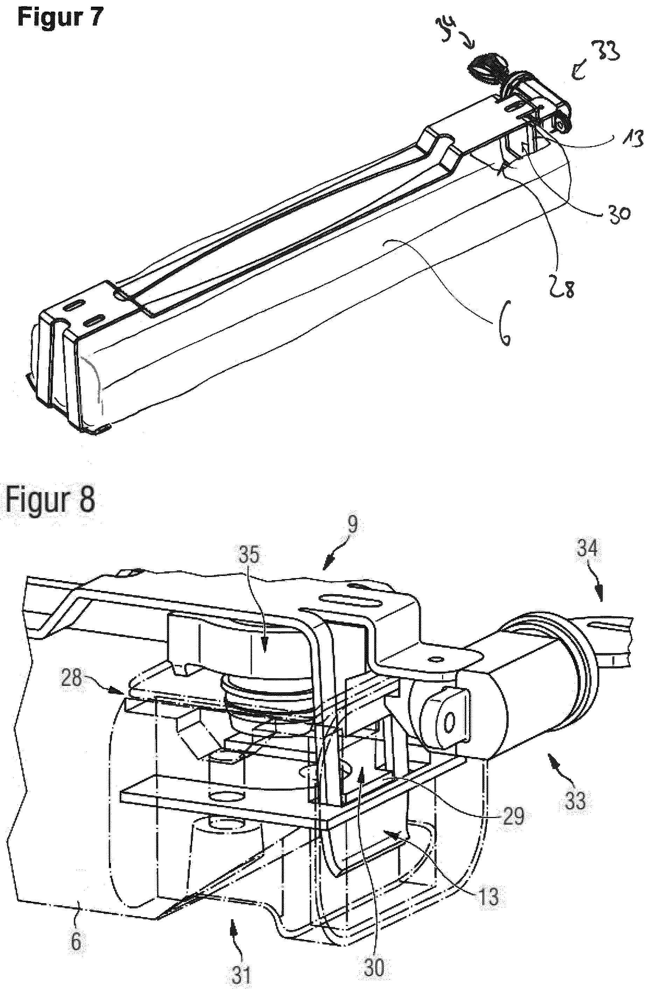

Zum Festlegen an der Batteriehalterung 9 weist die Batterie 6 an ihrer der Batteriehalterung 9 zugewandten Oberseite 26 im Bereich eines oberen Längsendes 27 der Batterie 6 eine Öffnung 28 auf. Die Öffnung 28 ist so gestaltet, dass die zweite Haltelasche 13 im zweiten Montageschritt in die Öffnung 28 eintauchen kann, wie in Figur 6 gezeigt. Auch die Figuren 7 bis 9 zeigen, dass die zweite Haltelasche 13 in die Öffnung 28 der Batterie 6 eintaucht. Im eingetauchten Zustand, d.h. insbesondere in einem finalen Einbauzustand der Batterie 6, verrastet die zweite federnde Haltelasche 13, mit einem entsprechenden Gegenrastelement 29. Hierzu ist ein freies Ende 21 der zweiten Haltelasche 13 optional ein wenig nach außen abgerundet ausgebildet, sodass beim Eindrücken der Batterie 6 gegen die Batteriehalterung 9 die zweite Haltelasche 13 entsprechend nach außen weggebogen wird und anschließend in einem ursprünglichen Zustand zurückfedert, in dem das Gegenrastelement 29 von der zweiten Haltelasche 13 hintergriffen ist.

Im Ausführungsbeispiel weist die zweite Haltelasche 13 hierzu eine Rastöffnung 30 auf, in die das Gegenrastelement 29 mit einer Rastnase eintaucht. Es sind auch viele andere Rastmechanismen und Ausgestaltungen denkbar, die an dieser Stelle nicht beschrieben werden. Wesentlicher Vorteil bei der gezeigten Lösung ist, dass das Verriegeln beziehungsweise Verrasten der zweiten Haltelasche 13 mit der Batterie 6 im Inneren der Batterie 6 beziehungsweise des Gehäuses der Batterie 6 erfolgt. Die mechanische Verriegelung, das heißt das formschlüssige Zusammenwirken der zweiten Haltelasche 13 mit der Batterie 6 ist somit im Inneren der Batterie 6 und damit geschützt vor einem unfreiwilligen Lösen oder Schlägen aus der Umgebung. Gegenüberliegend der Öffnung 28 weist die Batterie 6 eine weitere Öffnung, nämlich eine Entriegelungsöffnung 31 auf. Über die Entriegelungsöffnung 31, die an der Unterseite 32 der Batterie 6 ausgebildet ist, kann manuell die Federlasche 13 betätigt werden und vom Gegenrastelement 29 gelöst werden, sodass die Batterie 6 von der Batteriehalterung 9 abgenommen werden kann. Dadurch, dass die zweite Haltelasche 13 die Batterie 6 nicht von außen umgreift oder hält, sondern im Inneren durch Eintauchen in die Öffnung 28 mit der Batterie 6 zusammenwirkt, kann beim Abnehmen der Batterie 6 durch Betätigung der Federlasche 13 die Batterie 6 direkt in die Hand des Bedieners fallen. Dies stellt einen erheblichen Entriegelungs- und Bedienkomfort für einen Benutzer dar.

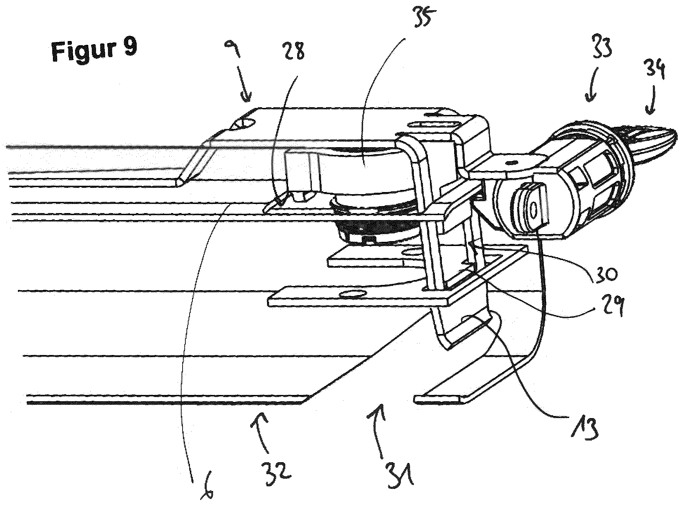

Ein weiterer Aspekt des gezeigten Ausführungsbeispiels stellt ein Schloss 33 dar. Das Schloss 33 ist an dem Rahmenabschnitt 3 oder der Batteriehalterung 9 angebracht und dient dem Verriegeln der Batterie 6 im montierten Zustand am Rahmenabschnitt 3. Wie insbesondere anhand der Figuren 8 und 9 erkennbar ist, handelt es sich bei dem Schloss 3 um ein herkömmliches Schloss, bei welchem mittels eines Schlüssels 34 ein Schließbolzen oder allgemein ein Schließelement zwischen einer entriegelten und einer verriegelten Position betätigbar ist. In der verriegelten Position wirkt das Verriegelungselement formschlüssig mit der Batterie 6 oder einem Teil der Batterie 6 derart zusammen, dass ein Abnehmen der Batterie 6 aus der Batteriehalterung 9 blockiert ist, selbst wenn die zweite Haltelasche 13 entriegelt ist. Ausgestaltungen des Schlosses 33 können beliebig sein und das Schloss 33 ist nicht auf die in den Figuren gezeigte Ausgestaltung begrenzt.

Optional ist ein elektrisches Kontaktelement 35 vorgesehen (siehe beispielsweise Figuren 9 und 8), mittels welcher im montierten Zustand der Batterie 6 eine elektrische Kontaktierung zwischen der Batteriehalterung 9 und der Batterie 6 sichergestellt ist. Das elektrische Kontaktelement 35 ist im Ausführungsbeispiel schwimmend gelagert, um Toleranzen oder Ungenauigkeiten bei der Fertigung der Batterie 6 auszugleichen.

### Bezugszeichenliste

- 1: Elektrofahrrad
- 2: Fahrradrahmen
- 3: Rahmenabschnitt
- 4: Tretlager
- 5: Antriebsvorrichtung
- 6: Batterie
- 7: Elektromotor
- 8: Getriebe
- 9: Batteriehalterung
- 10: erstes Ende
- 11: zweites Ende
- 12: erste Haltelasche
- 13: zweite Haltelasche
- 14: Steg
- 15: Montageabschnitt
- 16: Montageabschnitt
- 17: erste Haupterstreckungsebene
- 18: Mittelstegabschnitt
- 19: zweite Haupterstreckungsebene
- 20: freies Ende
- 21: freies Ende
- 22: Abstand
- 23: Zwischenraum
- 24: Auflageelement
- 25: unteres Ende
- 26: Oberseite
- 27: oberes Längsende
- 28: Öffnung
- 29: Gegenrastelement
- 30: Rastöffnung
- 31: Entriegelungsöffnung
- 32: Unterseite
- 33: Schloss
- 34: Schlüssel
- 35: Kontaktelement

## Patentansprüche

1. Elektrofahrrad (1), aufweisend
einen Fahrradrahmen (2) mit einem Rahmenabschnitt (3),
eine Batterie (6),
und
eine Batteriehalterung (9), die am Rahmenabschnitt (3) angeordnet ist und zwei Haltelaschen (12, 13) aufweist, mittels derer die Batterie (6) formschlüssig am Rahmenabschnitt (3) gehalten werden kann,
wobei die Batteriehalterung (9) so ausgebildet ist, dass
- in einem ersten Montageschritt - die Batterie (6) an die erste Haltelasche (12) ansetzbar und anschließend - in einem zweiten Montageschritt - gegen den Rahmenabschnitt (3) derart verschwenkbar ist, dass die Batterie (6) in Eingriff mit der zweiten Haltelasche (13) gelangt und dadurch an dem Fahrradrahmen (3) gehalten ist,
wobei
- die zweite Haltelasche (13) zum Verrasten mit der Batterie (6) federnd ausgebildet ist,
- die Batterie (6) eine Aussparung oder Öffnung (28) aufweist, in die die zweite Haltelasche (13) zum formschlüssigen Zusammenwirken mit der Batterie (6) im zweiten Montagschritt eintaucht, und
**dadurch gekennzeichnet, dass**
die Batterie (6) an einer dem Rahmenabschnitt (3) abgewandten Außenseite eine Öffnung (31) aufweist, sodass die zweite Haltelasche (13) von außen betätigt und entriegelt und dadurch die Batterie (6) abgenommen werden kann.

2. Elektrofahrrad (1) nach Anspruch 1, wobei die erste Haltelasche (12) derart ausgebildet ist, dass im ersten Montageschritt die Batterie (6) aufgelegt oder eingehängt werden kann.

3. Elektrofahrrad (1) nach einem der vorhergehenden Ansprüche, wobei die Batteriehalterung (9) einstückig ausgebildet ist und die beiden Haltelaschen (13) über einen Steg (14) verbunden sind.

4. Elektrofahrrad (1) nach Anspruch 3, wobei der Steg zwei Montageabschnitte (15, 16) aufweist, mittels derer die Batteriehalterung (9) an dem Rahmenabschnitt (3) festgelegt ist, wobei der Steg (14) zwischen den Montageabschnitten (15, 16) einen Mittelstegabschnitt (18) aufweist, der derart ausgebildet ist, dass dieser von dem Rahmenabschnitt (3) beabstandet verläuft, so dass zwischen dem Rahmenabschnitt (3) und dem Mittelstegabschnitt (18) ein Zwischenraum (23) gebildet ist.

5. Elektrofahrrad (1) nach einem der vorhergehenden Ansprüche, wobei die Batteriehalterung (9) aus einem Metallblech hergestellt ist.

6. Elektrofahrrad (1) nach einem der vorhergehenden Ansprüche, wobei an dem Rahmenabschnitt (3) oder der Batteriehalterung (9) ein Schloss (33) angeordnet ist, so dass die Batterie (6) im montierten Zustand am Rahmenabschnitt (3) verriegelbar ist.

7. Elektrofahrrad (1) nach einem der vorhergehenden Ansprüche, wobei die Batteriehalterung (9) ein elektrisches Kontaktelement (35) aufweist, welches ausgebildet ist, im montierten Zustand der Batterie (6) eine elektrische Kontaktierung zwischen Batterie (6) und Batteriehalterung (9) sicherzustellen.

## Claims

1. Electric bicycle (1) comprising
a bicycle frame (2) with a frame section (3),
a battery (6),
and
a battery holder (9) arranged on the frame section (3) and having two retaining tabs (12, 13) by means of which the battery (6) can be held in a form-fitting manner on the frame section (3), wherein the battery holder (9) is designed such that - in a first assembly step - the battery (6) can be placed on the first retaining tab (12) and then - in a second assembly step - can be pivoted against the frame section (3) in such a way that the battery (6) engages with the second retaining tab (13) and is thereby held on the bicycle frame (2),
wherein
- the second retaining tab (13) is resiliently designed for locking with the battery (6),
- the battery (6) has a recess or opening (28) into which the second retaining tab (13) engages in the second assembly step to form a form-fitting engagement with the battery (6), and
**characterized in that** the battery (6) has an opening (31) on an outer side facing away from the frame section (3) so that the second retaining tab (13) can be actuated and unlocked from the outside, thereby allowing the battery (6) to be removed.

2. Electric bicycle (1) according to claim 1, wherein the first retaining tab (12) is designed such that the battery (6) can be placed or hooked in during the first assembly step.

3. Electric bicycle (1) according to one of the preceding claims, wherein the battery holder (9) is designed in one piece and the two retaining tabs (13) are connected by a web (14).

4. Electric bicycle (1) according to claim 3, wherein the web has two mounting sections (15, 16) by means of which the battery holder (9) is fixed to the frame section (3), wherein the web (14) between the mounting sections (15, 16) has a central web section (18) which is designed such that it runs at a distance from the frame section (3) so that a space (23) is formed between the frame section (3) and the central web section (18).

5. Electric bicycle (1) according to one of the preceding claims, wherein the battery holder (9) is made of a metal sheet.

6. Electric bicycle (1) according to one of the preceding claims, wherein a lock (33) is arranged on the frame section (3) or the battery holder (9) so that the battery (6) can be locked to the frame section (3) when mounted.

7. Electric bicycle (1) according to one of the preceding claims, wherein the battery holder (9) has an electrical contact element (35) which is designed to ensure electrical contact between the battery (6) and the battery holder (9) when the battery (6) is mounted.

## Revendications

1. Vélo électrique (1), comprenant
un cadre de vélo (2) avec une partie de cadre (3),
une batterie (6)
et
un support de batterie (9) qui est disposé sur la partie de cadre (3) et comporte deux pattes de retenue (12, 13) au moyen desquelles la batterie (6) peut être maintenue par complément de forme sur la partie de cadre (3), le support de batterie (9) étant conçu de telle sorte que, - dans une première étape de montage, la batterie (6) puisse être placée sur la première patte de retenue (12) puis, dans une deuxième étape de montage, pivotée contre la partie de cadre (3) de telle sorte que la batterie (6) vienne en prise avec la deuxième patte de retenue (13) et soit ainsi maintenue sur le cadre de bicyclette (3),
dans laquelle
- la deuxième patte de retenue (13) est conçue de manière élastique pour s'encliqueter avec la batterie (6),
- la batterie (6) présente un évidement ou une ouverture (28) dans lequel la deuxième patte de retenue (13) s'enfonce lors de la deuxième étape de montage pour coopérer par complémentarité de forme avec la batterie (6), et
**caractérisé en ce que** la batterie (6) présente, sur une face extérieure opposée à la partie de cadre (3), une ouverture (31) de telle sorte que la deuxième patte de retenue (13) peut être actionnée et déverrouillée de l'extérieur, ce qui permet de retirer la batterie (6).

2. Vélo électrique (1) selon la revendication 1, la première patte de retenue (12) étant conçue de telle sorte que la batterie (6) peut être posée ou accrochée lors de la première étape de montage.

3. Vélo électrique (1) selon l'une des revendications précédentes, le support de batterie (9) étant réalisé d'un seul tenant et les deux pattes de retenue (13) étant reliées par une nervure (14).

4. Vélo électrique (1) selon la revendication 3, la nervure comportant deux sections de montage (15, 16) au moyen desquelles le support de batterie (9) est fixé à la partie de cadre (3), la nervure (14) présente, entre les sections de montage (15, 16), une partie de traverse centrale (18) qui est conçue de telle sorte qu'elle s'étend à distance de la partie de cadre (3), de manière à former un espace intermédiaire (23) entre la partie de cadre (3) et la partie de traverse centrale (18).

5. Vélo électrique (1) selon l'une des revendications précédentes, le support de batterie (9) étant fabriqué à partir d'une tôle métallique.

6. Vélo électrique (1) selon l'une des revendications précédentes, dans lequel un verrou (33) est disposé sur la partie de cadre (3) ou le support de batterie (9) de manière à ce que la batterie (6) puisse être verrouillée sur la partie de cadre (3) lorsqu'elle est montée.

7. Vélo électrique (1) selon l'une des revendications précédentes, le support de batterie (9) comportant un élément de contact électrique (35) qui est conçu pour assurer, lorsque la batterie (6) est montée, un contact électrique entre la batterie (6) et le support de batterie (9).
